# EUROPÄISCHE PATENTANMELDUNG

(11) **EP 4 516 728 A1**
(43) Veröffentlichungstag der Anmeldung: **05.03.2025**
(21) Anmeldenummer: 23020414.1
(22) Anmeldetag: 01.09.2023
(51) Int. Cl.: C01B 3/04

(54) **VERFAHREN UND ANLAGE ZUR GEWINNUNG EINES WASSERSTOFF ENTHALTENDEN PRODUKTS UNTER VERWENDUNG VON AMMONIAK**

(71) Anmelder: Linde GmbH, 82049 Pullach (DE)
(72) Erfinder: Peschel, Andreas, 82049 Pullach (DE); Behrens, Axel, 82049 Pullach (DE); Reinke, Michael, 82049 Pullach (DE)
(74) Vertreter: Fischer, Werner

(57) **Zusammenfassung**

Die Erfindung betrifft Verfahren und eine Anlage (100) zur Herstellung eines Wasserstoff enthaltenden Produkts, wobei Ammoniak (2) in einem Ammoniakcracker (20), dem Wärme zugeführt wird, umgesetzt wird, wobei der Ammoniakcracker (20) ein Katalysatorbett mit mindestens zwei Katalysatorsegmenten (20a, 20b, 20c) aufweist, wobei in einem ersten Katalysatorsegment (20a) ein Teil des Ammoniaks (2) unter Verwendung eines ersten Katalysators bei einer ersten Mindesttemperatur umgesetzt wird und in einem zweiten Katalysatorsegment (20b), das stromabwärts des ersten Katalysatorsegments (20a) angeordnet ist, ein weiterer Teil des Ammoniaks (2) unter Verwendung eines zweiten Katalysators bei einer zweiten Mindesttemperatur umgesetzt wird.

## Beschreibung

Die Erfindung betrifft ein Verfahren und eine Anlage zur Gewinnung eines Wasserstoff enthaltenden Produkts unter Verwendung von Ammoniak.

### Hintergrund der Erfindung

Ammoniak (NH₃) kann gemäß 2 NH₃ → N₂ + 3 H₂ katalytisch zu Stickstoff (N₂) und Wasserstoff (H₂) zerlegt (gecrackt, reformiert) werden. Die Reaktion ist endotherm und wird durch niedrigen Druck und hohe Temperatur begünstigt. Um einen Wasserstoffverdichter zu vermeiden, sind dennoch höhere Drücke wünschenswert.

Die Hauptreaktionsprodukte Wasserstoff und Stickstoff können in einem Gemisch als Produkt bereitgestellt werden, oder es kann eine Aufreinigung des Wasserstoffs erfolgen. Ein Wasserstoff-Stickstoff-Gemisch wird dabei auch als Formiergas bezeichnet. Auch eine weitere Nutzung des Wasserstoffs bzw. Wasserstoff-Stickstoff-Gemischs, beispielsweise in einer Gasturbine, die mit einem Generator gekoppelt ist, kann erfolgen. In allen Fällen, die jeweils Ausgestaltungen der Erfindung entsprechen können, wird also Wasserstoff aus Ammoniak gewonnen. Eine "Gewinnung eines Wasserstoff enthaltenden Produkts" im hier verstandenen Sinn schließt die Gewinnung eines wasserstoffhaltigen Gasgemischs, weiterer Produkte wie Stickstoff und/oder die anschließende Nutzung nicht aus.

Aus der Patent- und Nichtpatentliteratur sind unterschiedliche Verfahrenskonzepte und Reaktoren für die Zerlegung von Ammoniak zu Wasserstoff und Stickstoff beschrieben. Zu weiteren Details wird auf entsprechende Literatur verwiesen, statt vieler beispielsweise auf D. Sima et al., Int. J. Hydrogen Energy 45 (2020) 9342-9352.

Entsprechende Verfahrenskonzepte können eine Reaktionseinheit (auch als Ammoniakcracker bezeichnet) nach Art eines Reformierreaktors umfassen, der eine Druckwechseladsorption zur Wasserstoffreinigung zugeordnet ist. Beispielsweise sei in diesem Zusammenhang auf die EP 4 112 539 A1 und die EP 4 112 540 A1 verwiesen, deren Inhalt hier in vollem Umfang aufgenommen wird. In diesen Konzepten wird ein Katalysator für die Spaltreaktion verwendet. Typische Katalysatoren sind entweder Katalysatoren auf Nickelbasis, die bei erhöhten Temperaturen von etwa 800°C verwendet werden, oder Katalysatoren auf Edelmetallbasis (wie Ruthenium, Platin oder Palladium), die bei mittleren Temperaturen unter 650°C verwendet werden. Auch neue Katalysatoren auf der Basis von Eisen, Kobalt oder Nickel als Vollmaterial befinden sich in der Entwicklung.

Der Betrieb bei Temperaturen unter 650°C erfordert einen Katalysator auf Edelmetallbasis, der wesentlich teurer ist als Katalysatoren auf Nickelbasis. Wenn diese weniger teuren, beschichteten Katalysatoren auf Nickelbasis verwendet werden sollen, muss die Betriebstemperatur auf etwa 800°C erhöht werden, um eine ausreichende Aktivität zu erzielen. Der erste Teil des Katalysatorbetts (ab Einlass) ist weniger aktiv, da die Temperatur nicht ausreichend hoch ist. Eine ausreichende Temperatur wird in der Regel erst im weiteren Verlauf des Katalysatorbetts erreicht.

Beide Optionen haben jeweils einen Nachteil, der zu erhöhten Betriebskosten führt: hohe Katalysatorkosten (Edelmetall) oder höhere Temperaturen (Nickel).

Der Betrieb bei Temperaturen oberhalb von 600°C und hohem Ammoniakpartialdruck erhöht weiterhin das Risiko, dass die Materialstabilität des Reaktormaterials aufgrund von Nitridierungseffekten verringert wird.

Die vorliegende Erfindung stellt sich die Aufgabe, entsprechende Verfahren und Anlagen zur Gewinnung eines Wasserstoffprodukts unter Verwendung von Ammoniak zu verbessern und insbesondere effizienter zu gestalten.

### Offenbarung der Erfindung

Vor diesem Hintergrund werden ein Verfahren und eine Anlage zur Gewinnung eines wasserstoffhaltigen Produkts mit den Merkmalen der unabhängigen Patentansprüche vorgeschlagen. Ausgestaltungen sind Gegenstand der abhängigen Patentansprüche und der nachfolgenden Beschreibung.

Es wird ein Ammoniakcracker vorgeschlagen, der einen Reaktor mit mindestens zwei Katalysatorbereichen aufweist, wobei in einem ersten Bereich, der sich an der Einlassseite des Reaktors befindet, ein Katalysator verwendet wird, der ein Edelmetall aufweist. In einem zweiten Katalysatorbereich, der stromabwärts zum ersten Katalysatorbereich, d.h. näher zum Auslass des Reaktors hin angeordnet ist, werden Katalysatoren mit einem Nicht-Edelmetall, beispielsweise Kobalt oder Nickel verwendet. Die Temperatur des Reaktors steigt in dem Ammoniakcracker von einem Einlass hin zu einem Auslass an.

Dadurch kann vorteilhafterweise eine hohe Ammoniakumwandlung erreicht und die Effizienz des Ammoniakcrackers gesteigert werden.

Weiterhin ist die Menge an teuren Katalysatoren, die ein Edelmetall aufweisen, reduziert, da nur ein Teil des gesamten Katalysatorbettes im Reaktor mit diesem ausgestattet werden muss. Dennoch liegt auch in einem Teil des Katalysatorbetts mit Temperaturen unterhalb von 800°C eine hohe Katalysatoraktivität vor.

Zusätzlich können die Kosten des Ammoniakcrackers optimiert werden, da z.B. eine geringere Wandstärke des Reaktors notwendig ist, weil eine hohe Temperatur nicht im gesamten Reaktorbereich gehalten werden muss. Auch erlaubt dies eine kompaktere Bauweise des Reaktors und kann somit auch in Großanlagen mit wenig Platz eingebaut werden kann.

Außerdem kann vorteilhafterweise das Risiko der Nitridierung durch die hohe Aktivität von Katalysatoren, die ein Edelmetall enthalten, bei mittleren Temperaturen verringert werden. Bei deren Einsatz wird Ammoniak bereits bei Temperaturen von etwa 600°C zu Stickstoff und Wasserstoff gespalten. Nitridierung findet bei Temperaturen über 600°C statt. Da der Partialdruck des Ammoniaks durch das Cracken im ersten Katalysatorbereich reduziert wird, verringert sich das Nitridierungs-Potential in den nachfolgenden Katalysatorbereichen, die bei höheren Temperaturen betrieben werden. Die Nitrierung, die eine Art Korrosionseffekt ist, wirkt sich negativ auf die Stabilität des Reaktormaterials oberhalb von 600°C aus. Kosteneinsparungen aufgrund geringerer Anforderungen an die Stabilität des verwendeten Materials für den Reaktor sind möglich. Dadurch lassen sich nicht nur Kosten bei der Herstellung des Reaktors einsparen, sondern es wird weiterhin auch der Wartungs- und Instandhaltungsaufwand verringert.

In anderen Worten umfasst das vorgeschlagene Verfahren zur Herstellung eines Wasserstoff enthaltenden Produkts, dass Ammoniak in einem Ammoniakcracker, dem Wärme zugeführt wird, umgesetzt wird. Der Ammoniakcracker weist ein Katalysatorbett mit mindestens zwei Katalysatorsegmenten auf, wobei in einem ersten Katalysatorsegment der Ammoniak unter Verwendung eines ersten Katalysators bei einer ersten Mindesttemperatur umgesetzt wird und in einem zweiten Katalysatorsegment, das stromabwärts des ersten Katalysatorsegment angeordnet ist, der Ammoniak unter Verwendung eines zweiten Katalysators bei einer zweiten Mindesttemperatur umgesetzt wird.

Die erste Mindesttemperatur ist dabei insbesondere niedriger als die zweite Mindesttemperatur und die Temperatur im Katalysatorbett und/oder des Ammoniakgases steigt in Richtung vom Einlass zum Auslass des Reaktors an, d.h. in Strömungsrichtung. Am Einlass des Katalysatorbetts beträgt die erste Mindesttemperatur insbesondere mindestens 450°C, mindestens 525°C oder mindestens 600°C und höchstens 650°C oder höchstens 625°C, während die zweite, und bei mehr als zwei Katalysatorbereichen die weiteren (dritte, vierte, ...), Mindesttemperatur insbesondere mindestens 700°C, mindestens 800°C oder mindestens 850°C und höchstens 950°C oder höchstens 925°C beträgt.

In einer Ausführungsform enthält der im ersten Katalysatorsegment angeordnete Katalysator ein Edelmetall, insbesondere Ruthenium, oder besteht daraus. Die Ammoniak-Spaltreaktion mit einem Katalysator aus Edelmetall kann bereits bei niedrigeren Temperaturen durchgeführt werden, wodurch einerseits Betriebskosten, aber auch Kosten bei der Auslegung des Ammoniakcrackers, eingespart werden können. Weiterhin ist die Nitridierung bei diesen Temperaturen noch gering und der Partialdruck von Ammoniak in den späteren Katalysatorsegmenten wird gesenkt, sodass Investitionskosten reduziert werden.

In einer Ausführungsform enthält der im zweiten Katalysatorsegment angeordnete Katalysator Eisen, Kobalt oder Nickel oder besteht daraus. Im Gegensatz zu Katalysatoren aus Edelmetallen sind die Kosten für Katalysatoren aus Eisen, Kobalt oder Nickel niedriger, sodass Kosten bei der Herstellung des Ammoniakcrackers vorteilhafterweise reduziert werden können.

In einer Ausführungsform weist der Ammoniakcracker stromaufwärts des ersten Katalysatorsegments, d.h. dem ersten Katalysatorsegment vorgeschaltet, eine beheizbare Inertschüttung auf. Durch die Inertschüttung kann Ammoniak mit niedrigen Temperaturen in den Ammoniakcracker eingeleitet werden und wird erst im Ammoniakcracker durch die beheizte Inertschüttung auf die für die Reaktion notwendige hohe Temperatur gebracht.

Dadurch muss bei der Auslegung des Verfahrens und der Anlage zur Durchführung des Verfahrens die hohe Temperatur des Ammoniaks nur bei der Auslegung des Ammoniakcrackers selbst und nicht bei bereits vorgeschalteten Bauteilen berücksichtigt werden, wodurch Investitionskosten gesenkt werden können.

In einer Ausführungsform weist das Katalysatorbett mindestens drei Katalysatorsegmente auf, wobei in einem dritten Katalysatorsegment, das stromabwärts des zweiten Katalysatorsegments angeordnet ist, Ammoniak unter Verwendung eines dritten Katalysators bei einer dritten Mindesttemperatur umgesetzt wird.

Durch die Verwendung weiterer Katalysatorsegmente kann die Spaltreaktion an die in jedem Katalysatorsegment vorherrschende Zusammensetzung des Ammoniakgases angepasst werden, wodurch die Kosten bei der Auslegung des Ammoniakcrackers und die Effizienz der Ammoniak-Spaltreaktion optimiert werden.

In einer Ausführungsform enthält der Katalysator im ersten Katalysatorsegment ein Edelmetall, insbesondere Ruthenium, oder besteht daraus, und der Katalysator im zweiten Katalysatorsegment enthält Nickel, wobei der Anteil von Nickel von mindestens 10wt% oder mindestens 25wt% oder mindestens 40% oder 60wt% beträgt, und der Katalysator im dritten Katalysatorsegment enthält Nickel, wobei der Anteil von Nickel höchstens 5wt% oder höchstens 10wt% oder höchstens 15wt% beträgt. Der verbleibende Anteil an Gewicht entfällt auf das Trägermaterial auf dem das Katalysatormaterial aufgebracht ist.

In einer alternativen Ausführungsform enthält der Katalysator im ersten Katalysatorsegment ein Edelmetall, insbesondere Ruthenium, oder besteht daraus, der Katalysator im zweiten Katalysatorsegment enthält Kobalt oder besteht daraus und der Katalysator im dritten Katalysatorsegment enthält Nickel. Auf diese Weise kann eine Auslegung des Katalysatorbetts weiter optimiert werden.

Die Erfindung betrifft weiterhin eine Anlage zur Herstellung eines Wasserstoff enthaltenden Produkts, wobei die Anlage dazu eingerichtet ist, Ammoniak in dem Ammoniakcracker unter Erhalt eines nicht umgesetzten Ammoniak sowie Wasserstoff und Stickstoff enthaltenden Ammoniakgases umzusetzen.

Der Ammoniakcracker weist einen Reaktor mit mindestens zwei Segmenten auf, wobei in einem ersten Segment ein Teil des Ammoniaks unter Verwendung eines ersten Katalysators bei einer ersten Temperatur umgesetzt wird und in einem zweiten Segment, das stromabwärts des ersten Segments angeordnet ist, ein weiterer Teil des Ammoniaks unter Verwendung eines zweiten Katalysators bei einer zweiten Temperatur umgesetzt wird. Die Anlage ist insbesondere dazu eingerichtet ist, das Verfahren nach einem der vorhergehenden Ausführungsformen durchzuführen.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

### Kurze Beschreibung der Zeichnung

Ausführungsformen der Erfindung werden nachfolgend rein beispielhaft unter Bezugnahme auf die beigefügte Zeichnung unter Erläuterung des technischen Hintergrunds beschrieben.
Figur 1 veranschaulicht ein Verfahren bzw. eine Anlage gemäß einer Ausführungsform der vorliegenden Erfindung, und
Figur 2 zeigt ein Katalysatorbett mit drei Katalysatorsegmenten und einen dazugehörigen Temperaturverlauf im Katalysatorbett.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

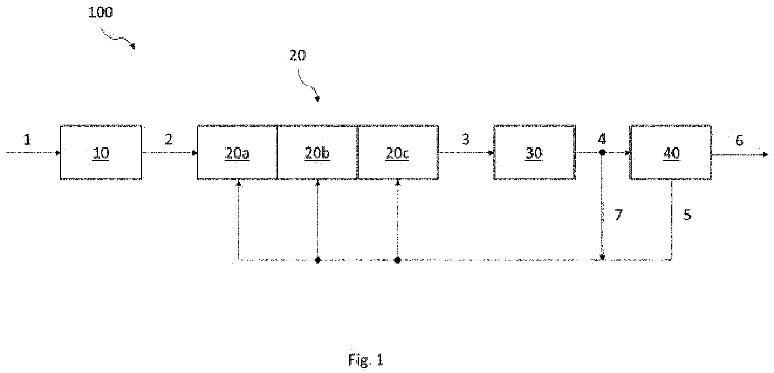

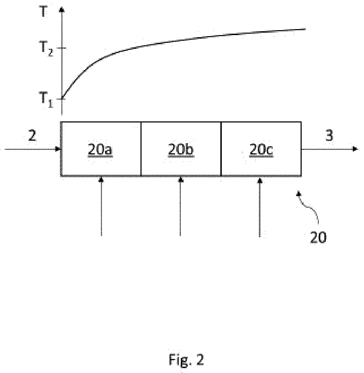

In Figur 1 ist eine Anlage 100 gemäß einer Ausgestaltung der vorliegenden Erfindung veranschaulicht. Figur 2 zeigt ein Katalysatorbett mit drei Katalysatorsegmenten 20a, 20b, 20c und einen dazugehörigen Temperaturverlauf im Katalysatorbett.

In der hier veranschaulichten Ausgestaltung wird ein Ammoniakeinsatz 1, beispielsweise aus einem Tank, falls erforderlich mittels mit einer Pumpe unter Druck gesetzt und in einer Vorbehandlungseinheit 10 verdampft und überhitzt. Der verdampfte und überhitzte Ammoniak 2 wird einem Ammoniakcracker 20 zugeführt. Ein dem Ammoniakcracker 20 entnommenes Rohgas bzw. Spaltgas 3 enthält in der Regel eine gewisse Menge an nicht umgewandelten Ammoniak, da das thermodynamische Gleichgewicht die Umwandlung bei hoher Temperatur und niedrigem Druck begünstigt, die Umwandlung unter technisch relevanten Bedingungen jedoch bei erhöhtem Druck und begrenzter Temperatur vorgenommen wird.

Dem Ammoniakcracker 20, und damit dem Katalysatorbett und Ammoniak 2 im Reaktor, wird von außen Wärme zugeführt, z. B. durch Verbrennung eines Brennstoffs, um die endotherme Reaktion anzutreiben, wobei sich der kälteste Abschnitt im Einlassbereich und der heißeste Abschnitt am Auslass des Ammoniakcrackers 20 befindet. Die Temperatur im Reaktor steigt dabei vom Einlassbereich zum Auslassbereich des Ammoniakcrackers 20 hin an.

Der Ammoniakcracker 20 weist dabei ein Katalysatorbett mit drei Katalysatorsegmenten 20a, 20b, 20c auf. Vor den Katalysatorsegmenten kann im Ammoniakcracker 20 weiterhin eine Inertschüttung (nicht gezeigt) vorgesehen sein, durch die der Ammoniak 2 auf die für die Reaktion notwendige Temperatur gebracht wird. In einem ersten Katalysatorsegment 20a wird ein Teil des Ammoniaks 2, der durch die Vorbehandlungseinheit 10 insbesondere auf eine erste Mindesttemperatur T₁ von mindestens 450°C oder mindestens 525°C oder mindestens 600°C und höchstens 650°C oder höchstens 625°C erhitzt wurde, mit einem ersten Katalysator aus Edelmetall, insbesondere Ruthenium, in Stickstoff und Wasserstoff gespalten. Die Temperaturen im Reaktor werden dabei so eingestellt, dass der erste Katalysator mit hoher Aktivität und/oder Umsatzrate betrieben wird.

In einem zweiten Katalysatorsegment 20b wird ein weiterer Teil des Ammoniaks 2, der durch die Spaltung im ersten Katalysatorsegment 20a einen geringeren Partialdruck aufweist, mit einem zweiten Katalysator in Stickstoff und Wasserstoff gespalten. Der zweite Katalysator kann dabei insbesondere Kobalt oder Nickel enthalten oder daraus bestehen, wobei im Fall eines Katalysators auf Nickel-Basis der zweite Katalysator einen Nickel-Anteil von mindestens 10wt% oder mindestens 25wt% oder mindestens 40wt% oder 60wt% aufweist. Weiterhin findet die Ammoniak-Spaltreaktion im zweiten Katalysatorsegment 20b bei einer zweiten Mindesttemperatur T₂ statt, die höher als die erste Mindesttemperatur T₁ des ersten Katalysatorsegments ist. Die zweite Mindesttemperatur T₂ beträgt insbesondere mindestens 700°C oder mindestens 800°C oder mindestens 850°C und höchstens 950°C oder höchstens 925°C. Die zweite Mindesttemperatur T₂ ist dabei wiederum so gewählt, dass der zweite Katalysator mit hoher Aktivität und/oder Umsatzrate betrieben wird.

In einem dritten Katalysatorsegment 20c wird Ammoniak 2, der durch die Spaltung im ersten Katalysatorsegment 20a und im zweiten Katalysatorsegment 20b einen noch geringeren Partialdruck aufweist, mit einem dritten Katalysator in Stickstoff und Wasserstoff gespalten. Der dritte Katalysator enthält insbesondere Nickel, wobei der Nickel-Anteil höchstens 5wt% oder höchsten 10wt% oder höchstens 15wt% beträgt. Die dritte Mindesttemperatur im dritten Katalysatorsegment 20c ist dabei insbesondere höher als die zweite Mindesttemperatur T₂.

Weiterhin ist auch denkbar, dass das Katalysatorbett nur zwei Katalysatorsegmente, ein erstes Katalysatorsegment mit einem Katalysator aus einem Edelmetall und ein zweites Katalysatorsegment mit einem Katalysator aus einem Nicht-Edelmetall wie Kobalt oder Nickel aufweist. Auch sind Katalysatorbetten mit mehr als drei Segmenten denkbar.

Nach einer Wärmeintegration 30 liegt das Rohgas 3 als abgekühltes Rohgas 4 vor. Nicht umgewandelter Ammoniak wird mittels einer Druckwechseladsorption 40 in einem Stoffstrom 5 zurückgewonnen, wobei es sich bei dem Stoffstrom 5 um ein Restgas der Druckwechseladsorption 40 handelt. In der Druckwechseladsorption 40 wird ferner eine Produktfraktion 6 gewonnen, die, in der vorliegenden spezifischen Ausgestaltung, hauptsächlich Wasserstoff und Spuren von Stickstoff, Ammoniak enthalten kann. Wasser kann optional mit dem Ammoniak abgetrennt werden und Teil des Stoffstroms 5 sein. Wasser kann in "wasserfreiem" Ammoniak technischer Qualität enthalten sein.

Das Restgas der Druckwechseladsorption 40, d.h. der Stoffstrom 5, wird in dieser Ausführungsform in einem oder mehreren Brennern des Ammoniakcrackers 20 als Energiequelle verwendet. Alternativ ist auch die Verwendung in einem externen befeuerten Heizer (nicht dargestellt) möglich. Die Differenz des Wärmebedarfs für die endotherme Reaktion des Ammoniakcrackers 20 kann durch die Verbrennung eines Teils des Rohgases 7 gedeckt werden.

## Patentansprüche

1. Verfahren (100) zur Herstellung eines Wasserstoff enthaltenden Produkts, wobei Ammoniak (2) in einem Ammoniakcracker (20), dem Wärme zugeführt wird, umgesetzt wird, **dadurch gekennzeichnet, dass** der Ammoniakcracker (20) ein Katalysatorbett mit mindestens zwei Katalysatorsegmenten (20a, 20b, 20c) aufweist, wobei in einem ersten Katalysatorsegment (20a) ein Teil des Ammoniaks (2) unter Verwendung eines ersten Katalysators bei einer ersten Mindesttemperatur (T₁) umgesetzt wird und in einem zweiten Katalysatorsegment (20b), das stromabwärts des ersten Katalysatorsegments (20a) angeordnet ist, ein weiterer Teil des Ammoniaks (2) unter Verwendung eines zweiten Katalysators bei einer zweiten Mindesttemperatur (T₂) umgesetzt wird.

2. Verfahren nach Anspruch 1, wobei die erste Mindesttemperatur niedriger als die zweite Mindesttemperatur ist.

3. Verfahren nach einem der vorhergehenden Ansprüche, wobei die Temperatur des Katalysatorbetts in Richtung von einem Einlass des Katalysatorbetts hin zu einem Auslass des Katalysatorbetts steigt.

4. Verfahren nach einem der vorhergehenden Ansprüche, wobei die erste Mindesttemperatur (T₁) mindestens 450°C oder mindestens 525°C oder mindestens 600°C und höchstens 650°C oder höchstens 625°C beträgt.

5. Verfahren nach einem der vorhergehenden Ansprüche, wobei die zweite Mindesttemperatur (T₂) mindestens 700°C oder mindestens 800°C oder mindestens 850°C oder höchstens 950°C oder höchstens 900°C beträgt.

6. Verfahren nach einem der vorhergehenden Ansprüche, wobei der im ersten Katalysatorsegment angeordnete Katalysator ein Edelmetall, insbesondere Ruthenium, Platin oder Palladium, enthält.

7. Verfahren nach einem der vorhergehenden Ansprüche, wobei der im zweiten Katalysatorsegment angeordnete Katalysator Kobalt oder Nickel enthält.

8. Verfahren nach einem der vorhergehenden Ansprüche, wobei der Ammoniakcracker (20) stromaufwärts des ersten Katalysatorsegments (20a) eine beheizte Inertschüttung aufweist.

9. Verfahren nach einem der vorhergehenden Ansprüche, wobei das Katalysatorbett mindestens drei Katalysatorsegmente (20a, 20b, 20c) aufweist, wobei in einem dritten Katalysatorsegment (20c), das stromabwärts des zweiten Katalysatorsegments (20b) angeordnet ist, ein weiterer Teil des Ammoniaks (2) unter Verwendung eines dritten Katalysators bei einer dritten Mindesttemperatur umgesetzt wird.

10. Verfahren nach Anspruch 9, wobei der erste Katalysator ein Edelmetall, insbesondere Ruthenium, enthält,
wobei der zweite Katalysator Nickel enthält, wobei der Anteil von Nickel von mindestens 10wt% oder mindestens 25wt% oder mindestens 40wt% oder 60wt% beträgt,
wobei der dritte Katalysator Nickel enthält, wobei der Anteil von Nickel höchstens 5wt% oder höchsten 10wt% oder höchstens 15wt% beträgt.

11. Verfahren nach Anspruch 9, wobei der erste Katalysator ein Edelmetall, insbesondere Ruthenium, enthält,
wobei der zweite Katalysator Kobalt enthält und wobei der dritte Katalysator Nickel enthält.

12. Anlage (100) zur Herstellung eines Wasserstoff enthaltenden Produkts, mit einem Ammoniakcracker (20), wobei die Anlage dafür eingerichtet ist, Ammoniak (2) in dem Ammoniakcracker (20) umzusetzen,
**dadurch gekennzeichnet, dass** der Ammoniakcracker (20) ein Katalysatorbett mit mindestens zwei Katalysatorsegmenten (20a, 20b, 20c) aufweist, wobei die Anlage (100) dafür eingerichtet ist, in einem ersten Katalysatorsegment (20a) einen Teil des Ammoniaks (2) unter Verwendung eines ersten Katalysators bei einer ersten Mindesttemperatur (T₁) umzusetzen und in einem zweiten Katalysatorsegment (20b), das stromabwärts des ersten Katalysatorsegments (20a) angeordnet ist, einen weiteren Teil des Ammoniaks (2) unter Verwendung eines zweiten Katalysators bei einer zweiten Mindesttemperatur (T₂) umgesetzt wird.

13. Anlage (100) nach Anspruch 12, wobei die Anlage (100) dazu eingerichtet ist, ein Verfahren nach einem der Ansprüche 1 bis 11 durchzuführen.
